# EUROPÄISCHE PATENTSCHRIFT

(11) **EP 3 228 374 B1**
(45) Veröffentlichungstag und Bekanntmachung des Hinweises auf die Patenterteilung: **14.10.2020**
(21) Anmeldenummer: 17163961.0
(22) Anmeldetag: 30.03.2017
(51) Int. Cl.: B01D 27/08, B01D 27/10

(54) **WECHSELFILTER EINER BEHANDLUNGSVORRICHTUNG ZUR BEHANDLUNG VON INSBESONDERE FLÜSSIGEN FLUIDEN UND BEHANDLUNGSVORRICHTUNG**
REPLACEABLE FILTER OF A TREATMENT DEVICE FOR THE TREATMENT OF LIQUID FLUIDS IN PARTICULAR AND TREATMENT DEVICE
FILTRE AMOVIBLE D'UN DISPOSITIF DE TRAITEMENT DESTINÉ À TRAITER EN PARTICULIER DES FLUIDES LIQUIDES ET DISPOSITIF DE TRAITEMENT

(30) Priorität: 06.04.2016 DE 102016003942
(43) Veröffentlichungstag der Anmeldung: 11.10.2017
(73) Patentinhaber: Mann+Hummel GmbH, 71636 Ludwigsburg (DE)
(72) Erfinder: THALMANN, Christian, 67346 Speyer (DE); TRAUBLINGER, Martin, 84088 Neufahrn (DE); BAMMERSPERGER, Ludwig, 94419 Reisbach (DE)
(74) Vertreter: Seyboth, Matthias

(56) Entgegenhaltungen:
- EP-A2- 0 221 675
- WO-A1-2008/118939
- DE-A1-102013 021 299
- DE-A1-102015 000 342

## Beschreibung

### Technisches Gebiet

Die Erfindung betrifft einen Wechselfilter für eine oder einer Behandlungsvorrichtung, insbesondere einer Filtervorrichtung zur Behandlung, insbesondere Filtrierung, von insbesondere flüssigen Fluiden, insbesondere Kraftstoff, Öl oder Wasser, insbesondere einer Brennkraftmaschine, insbesondere eines Kraftfahrzeugs, welcher ein Gehäuse aufweist mit einem Gehäusetopf, einem Gehäusedeckel, wenigstens einem Einlass für das zu behandelnde Fluid und wenigstens einem Auslass für das behandelte Fluid, wobei der Wechselfilter mittels einer lösbaren bajonettartigen Verbindungseinrichtung unter Ausführung einer Dreh-/Steckbewegung um eine Verbindungsachse der Behandlungsvorrichtung mit einem Anschlusskopf der Behandlungsvorrichtung verbunden werden kann und die Verbindungseinrichtung wenigstens ein Gehäuse-Verbindungsteil auf Seiten des Gehäuses aufweist, das zum Verbinden der Verbindungseinrichtung mit wenigstens einem Kopf-Verbindungsteil auf Seiten des Anschlusskopfs zusammenwirken kann, wobei der wenigstens eine Einlass mit wenigstens einem Zulauf des Anschlusskopfs für das zu behandelnde Fluid und/oder der wenigstens eine Auslass mit wenigstens einem Ablauf des Anschlusskopfs für das behandelnde Fluid verbunden werden kann, wobei das wenigstens eine Gehäuse-Verbindungsteil auf bezüglich der Verbindungsachse axial gegenüberliegenden Seiten jeweils eine Funktionsfläche aufweist.

Ferner betrifft die Erfindung eine Behandlungsvorrichtung, insbesondere eine Filtervorrichtung zur Behandlung, insbesondere Filtrierung, von insbesondere flüssigen Fluiden, insbesondere Kraftstoff, Öl oder Wasser, insbesondere einer Brennkraftmaschine, insbesondere eines Kraftfahrzeugs, mit wenigstens einem Wechselfilter, welcher ein Gehäuse mit einem Gehäusetopf, einem Gehäusedeckel, wenigstens einem Einlass für das zu behandelnde Fluid und wenigstens einem Auslass für das behandelte Fluid aufweist, und mit einem Anschlusskopf, der wenigstens einen Zulauf für das zu behandelnde Fluid, der mit dem wenigstens einen Einlass verbindbar ist, und/oder wenigstens einen Ablauf für das behandelte Fluid, der mit dem wenigstens einen Auslass verbindbar ist, aufweist, wobei der Anschlusskopf und der Wechselfilter mittels einer lösbaren bajonettartigen Verbindungseinrichtung unter Ausführung einer Dreh-/Steckbewegung um eine Verbindungsachse der Behandlungsvorrichtung miteinander verbunden werden können und die Verbindungseinrichtung wenigstens ein Gehäuse-Verbindungsteil auf Seiten des Gehäuses und wenigstens ein Kopf-Verbindungsteil auf Seiten des Anschlusskopfs aufweist, die zum Verbinden der Verbindungseinrichtung miteinander zusammenwirken können.

### Stand der Technik

Aus der DE 10 2013 021 299 A1 ist eine Behandlungsvorrichtung, insbesondere Filtervorrichtung zur Behandlung, insbesondere Filtrierung, von insbesondere flüssigen Fluiden, insbesondere Kraftstoff, Öl oder Wasser, insbesondere einer Brennkraftmaschine, insbesondere eines Kraftfahrzeugs, bekannt, mit einem Behandlungselement, welches ein Gehäuse mit einem Gehäusetopf, einem Gehäusedeckel, wenigstens einem Einlass für das zu behandelnde Fluid und wenigstens einem Auslass für das behandelte Fluid aufweist. Ein Anschlusskopf weist wenigstens einen Zulauf für das zu behandelnde Fluid, der mit dem wenigstens einen Einlass verbindbar ist, und/oder wenigstens einen Ablauf für das behandelte Fluid, der mit dem wenigstens einen Auslass verbindbar ist, auf. Der Anschlusskopf und das Behandlungselement können mittels einer lösbaren bajonettartigen Verbindungseinrichtung unter Ausführung einer Dreh-/Steckbewegung um eine Verbindungsachse der Behandlungsvorrichtung miteinander verbunden werden. Die Verbindungseinrichtung weist wenigstens ein Gehäuse-Verbindungsteil auf Seiten des Gehäuses und wenigstens ein Kopf-Verbindungsteil auf Seiten des Anschlusskopfs auf, die zum Verbinden der Verbindungseinrichtung miteinander zusammenwirken können. Wenigstens ein erstes der Verbindungsteile weist auf bezüglich der Verbindungsachse axial gegenüberliegenden Seiten jeweils eine Funktionsfläche auf. Wenigstens ein zweites der Verbindungsteile weist wenigstens eine Gegenfunktionsfläche auf, welche zum Zusammenwirken eine der Funktionsflächen des wenigstens einen ersten Verbindungsteils hintergreift. Auf Seiten des wenigstens einen zweiten Verbindungsteils ist wenigstens ein Führungselement angeordnet, welches mit der wenigstens einen Gegenfunktionsfläche wenigstens einen Einführspalt begrenzt, dessen bezüglich der Verbindungsachse axiale Ausdehnung wenigstens so groß ist wie der maximale axiale Abstand der beiden axial gegenüberliegenden Funktionsflächen des wenigstens einen ersten Verbindungsteils. In dem Einführspalt kann das wenigstens eine erste Verbindungsteil beim Schließen/Öffnen der Verbindungseinrichtung geführt werden. Eine der Funktionsflächen des wenigstens einen ersten Verbindungsteils wird an der Gegenfunktionsfläche entlang geführt und die andere der Funktionsflächen wird an dem wenigstens einen Führungselement entlang geführt.

Der Erfindung liegt die Aufgabe zugrunde, einen Wechselfilter und eine Behandlungsvorrichtung der eingangs genannten Art zu gestalten, bei denen das wenigstens eine Gehäuse-Verbindungsteil platzsparender und/oder geschützter an dem Wechselfilter angeordnet sein kann.

### Offenbarung der Erfindung

Diese Aufgabe wird erfindungsgemäß dadurch gelöst, dass ein Rand des Gehäusetopfs aufseiten des Gehäusedeckels wenigstens das wenigstens eine Gehäuse-Verbindungsteil bezüglich der Verbindungsachse axial außen überragt. Als Rand des Gehäusetopfs ist dabei der radial äußere Rand des Gehäusetopfs auf der Seite des Verbindungsbereichs, d. h. aufseiten des Gehäusedeckels bezeichnet. In diesem Bereich sind in der Regel die Ein- und Auslassöffnungen und die Verbindungseinrichtung zur lösbaren Befestigung an einem Anschlusskopf angeordnet.

Erfindungsgemäß ist ein oberster Rand des Gehäusetopfs oberhalb eine Oberkante des wenigstens einen Gehäuse-Verbindungsteils angeordnet. Auf diese Weise kann das wenigstens eine Gehäuse-Verbindungsteil geschützt und platzsparend innerhalb des Randes des Gehäusetopfs angeordnet sein. Auf diese Weise kann der Wechselfilter einfacher verpackt, transportiert und/oder gelagert werden. Der Wechselfilter kann leichter auf Fertigungsbändern transportiert werden. Der Wechselfilter kann dabei auf dem Rand stehen. Dadurch, dass der Rand axial übersteht, kann verhindert werden, dass der Wechselfilter mit dem wenigstens einen Gehäuse-Verbindungsteil irgendwo hängenbleibt. Ferner kann der Wechselfilter einfacher insbesondere in einem Faltkarton verpackt werden. Durch den überstehenden Rand kann verhindert werden, dass etwaige scharfkantige Bereiche des wenigstens einen Gehäuse-Verbindungsteils die Verpackung, insbesondere den Faltkarton, beschädigen. Insgesamt kann der Wechselfilter bei Lagerung und Transport zu einem Verwendungsort besser geschützt werden. Der überstehende Rand des Gehäusetopfs verhindert, dass das wenigstens eine Gehäuse-Verbindungsteil beschädigt werden kann. Ferner kann gegebenenfalls wenigstens ein Vorspannelement der Verbindungseinrichtung zur Realisierung einer mechanischen Vorspannung des Wechselfilters am Anschlusskopfs aufseiten des Anschlusskopfs bezüglich der Verbindungsachse in axialer Richtung kleiner ausgestaltet sein. Auf diese Weise kann eine Vorspanncharakteristik verbessert werden. Insbesondere kann eine entsprechende Feder eine flachere Geometrie aufweisen. So kann eine bessere Federcharakteristik erreicht werden.

Erfindungsgemäß weist der Wechselfilter aufseiten des Gehäusedeckels wenigstens eine Dichtungseinrichtung auf, die mit einem entsprechenden Bauteil, insbesondere einer Dichtfläche, aufseiten des Anschlusskopfs zur Umgebung hin dichtend zusammenwirken kann. Vorteilhafterweise kann die wenigstens eine Dichtungseinrichtung wenigstens eine Dichtungsaufnahme für eine Dichtung aufweisen. Vorteilhafterweise kann die wenigstens eine Dichtungsaufnahme wenigstens einen Halteabschnitt, insbesondere mit einer Dichtungsnut, aufweisen, mit dem wenigstens eine Dichtung gehalten werden kann. Vorteilhafterweise kann mit der wenigstens einen Dichtungseinrichtung wenigstens ein fluidführender Bereich der Behandlungsvorrichtung zur Umgebung hin abgedichtet werden. Vorteilhafterweise kann die wenigstens eine Dichtungseinrichtung die Verbindungseinrichtung in axialer Richtung um maximal 5 mm nach oben oder nach unten übertragen. Vorteilhafterweise kann die wenigstens eine Dichtungseinrichtung einen in Axialrichtung obersten Punkt des wenigstens einen Gehäuse-Verbindungsteils in axialer Richtung um bis zu 5 mm nach oben überragen. Zusätzlich oder alternativ kann die wenigstens eine Dichtungseinrichtung einen in Axialrichtung untersten Punkt des wenigstens einen Gehäuse-Verbindungsteils in axialer Richtung um bis zu 5 mm nach unten überragen. Dies ist bezüglich der Bauraumausnutzung von Vorteil, da die wenigstens eine Dichtungseinrichtung die axiale Erstreckung der Verbindungseinrichtung nutzt.

Vorteilhafterweise kann sich wenigstens eine Dichtungseinrichtung, insbesondere eine Ringdichtung oder eine Ringdichtungseinheit, möglichst nah an der Verbindungsachse befinden, also einen möglichst kleinen Durchmesser aufweisen. Auf diese Weise kann eine Kraft, welche von der wenigstens einen Dichtungseinrichtung in axialer Richtung auf die Verbindungseinrichtung ausgeübt werden kann, verringert werden. Die Verbindungsteile der Verbindungseinrichtung können so mechanisch entlastet werden. Dadurch, dass die wenigstens eine Dichtungseinrichtung einen möglichst kleinen Durchmesser aufweist, kann das erforderliche Drehmoment zum Öffnen oder Schließen der Verbindungseinrichtung verringert werden. So können entsprechend die erforderlichen Öffnungs- oder Schließkräfte verringert werden. Dies kann sich vorteilhaft auf die Wartungsfreundlichkeit und/oder die Belastbarkeit des Wechselfilters auswirken.

Vorteilhafterweise kann die wenigstens eine Dichtungseinrichtung wenigstens eine Ringdichtung, insbesondere einen O-Ring oder eine Formdichtung, aufweisen. Die wenigstens eine Dichtungseinrichtung kann vorteilhafterweise bezüglich der Verbindungsachse radial, insbesondere nach außen oder nach innen, dichtend wirken. Zusätzlich oder alternativ kann die wenigstens eine Dichtungseinrichtung in axialer Richtung dichtend wirken.

Erfindungsgemäß überragt der Rand des Gehäusetopfs aufseiten des Gehäusedeckels die wenigstens eine Dichtungseinrichtung bezüglich der Verbindungsachse axial außen. Auf diese Weise kann auch die wenigstens Dichtungseinrichtung geschützt und platzsparend innerhalb des Randes des Gehäusetopfs angeordnet sein.

Vorteilhafterweise kann der Rand des Gehäusetopfs oberhalb einer Oberkante eines Halters angeordnet sein, der eine Nut für eine äußere Dichtung formt.

Bei einer weiteren vorteilhaften Ausführungsform kann wenigstens ein Teil der wenigstens einen Dichtungseinrichtung mit dem Gehäusedeckel insbesondere einstückig verbunden sein. Dies kann sich vorteilhaft auf die Belastbarkeit des Wechselfilters auswirken.

Eine Dichtungsnut einer Dichtungsaufnahme der wenigstens einen Dichtungseinrichtung kann alternativ auf ihrer dem Filterbalg axial abgewandten Seite mit einem separaten Abdeckring bedeckt sein. Der Abdeckring kann dabei mittels Klemmlaschen mit einem äußeren Dichtungsstutzen verbunden sein.

Vorteilhafterweise kann wenigstens ein Teil der Dichtungsaufnahme, insbesondere eine Dichtungsnut, an oder in den Gehäusedeckel geformt sein.

Vorteilhafterweise kann wenigstens ein Teil wenigstens einer Dichtungseinrichtung am Wechselfilter, insbesondere dem Gehäusedeckel und/oder gegebenenfalls der Endscheibe des Filterelements, angeordnet sein. Auf diese Weise kann die wenigstens eine Dichtungseinrichtung gemeinsam mit dem Wechselfilter ausgetauscht werden.

Erfindungsgemäß ist die wenigstens eine Dichtungseinrichtung bezüglich der Verbindungsachse radial innerhalb des wenigstens einen Gehäuse-Verbindungsteils angeordnet. Auf diese Weise kann das wenigstens eine Gehäuse-Verbindungsteil bezüglich der Verbindungsachse entsprechend weit außen angeordnet sein. So kann eine bessere Krafteinleitung bezüglich der Verbindungskräfte erreicht werden.

Bevorzugt kann die wenigstens eine Dichtungseinrichtung den wenigstens einen Einlass und den wenigstens einen Auslass bezüglich der Verbindungsachse umfangsmäßig umgeben. Auf diese Weise können mit nur einer Dichtung mehrere, insbesondere alle fluidführenden Räume nach außen, insbesondere zur Umgebung und/oder zu den Verbindungsteilen der Verbindungseinrichtung hin, abgedichtet werden.

Bei einer weiteren vorteilhaften Ausführungsform kann die wenigstens eine Dichtungseinrichtung wenigstens eine Dichtung aufweisen. Auf diese Weise kann die wenigstens eine Dichtung gemeinsam mit dem Wechselfilter montiert und ausgetauscht werden. Vorteilhafterweise kann die wenigstens eine Dichtung verliersicher in der wenigstens einen Dichtungsaufnahme der wenigstens einen Dichtungseinrichtung angeordnet sein. Auf diese Weise kann die wenigstens eine Dichtung beim Transport oder bei einer Handhabung des Wechselfilters nicht verloren gehen.

Bei einer weiteren vorteilhaften Ausführungsform kann wenigstens eine Funktionsfläche einen etwa schraubenförmigen Verlauf um die Verbindungsachse haben. Auf diese Weise kann einfach eine kombinierte Dreh-/Steckbewegung erreicht werden. Durch Drehung des Wechselfilters um die Verbindungsachse wird dieses gleichzeitig in axialer Richtung gegen den Anschlusskopf gepresst.

Bei einer weiteren vorteilhaften Ausführungsform kann wenigstens ein Gehäuse-Verbindungsteil wenigstens ein Teil einer schraubenförmigen bajonettartigen Verbindungseinrichtung aufweisen oder mit bilden. Auf diese Weise können die Vorteile einer bajonettartigen Verbindung und einer Schraubverbindung kombiniert werden. Eine bajonettartige Verbindung hat den Vorteil, dass sie einfach und schnell mit wenigen Umdrehungen verbunden und gelöst werden kann. Eine Schraubverbindung hat den Vorteil, dass beim Schließen der Verbindung entsprechend große bezüglich der Verbindungsachse axiale Verbindungskräfte realisiert werden können.

In einer weiteren vorteilhaften Ausführungsform mit einer schrauben- oder bajonettartigen Verbindungseinrichtung kann kopfseitig ein Vorspannelement vorgesehen sein, welches sich bevorzugt am Rand des Gehäusetopfes in axialer Richtung abstützen kann. Damit kann die betriebssichere Verspannung der Verbindungseinrichtung begünstigt werden. Der Rand ist hierzu bevorzugt als Bördelrand ausgeführt. Dies ermöglicht es, die Verspannkräfte aufnehmen zu können. Für eine besonders kippfeste Verbindung ist es hierbei von Vorteil, wenn der Rand das Gehäuse-Verbindungsteil (insbesondere dessen Funktionsfläche(n)) sowie die mindestens eine Dichtungseinrichtung zur Abdichtung gegenüber der Umgebung, die mit einem entsprechenden Bauteil, insbesondere einer Dichtfläche, aufseiten des Anschlusskopfs zur Umgebung hin dichtend zusammenwirken kann, jeweils überragt und dabei jeweils maximal um 15 mm, bevorzugt maximal um 10 mm, besonders bevorzugt maximal um 5 mm überragt. Besonders vorteilhaft ist es, wenn der Rand das Gehäuse-Verbindungsteil und/oder die mindestens eine Dichtungseinrichtung, maximal um 10 mm, besonders bevorzugt maximal um 5 mm überragt. Hierbei ist es wesentlich, dass der Rand oder ein anderer Teil des Gehäusetopfes oder -deckels, der die Verspannkräfte eines Vorspannelementes aufnimmt, das Gehäuse-Verbindungsteil (insbesondere dessen für die Verbindung wirksamen Funktionsfläche(n)) und die mindestens eine Dichteinrichtung im Wesentlichen innerhalb einer Ebene senkrecht zur Mittelachse angeordnet sind. Dies bedeutet in der Regel für derartige Gehäuse insbesondere von Wechselfiltern insbesondere einen Bereich von maximal 15 mm, bevorzugt maximal 10 mm, besonders bevorzugt maximal 5 mm entlang der Mittelachse und/oder bevorzugt einen Bereich von maximal 10 %, besonders bevorzugt von maximal 5 % der axialen Erstreckung des Gehäuses.

Bei einer weiteren vorteilhaften Ausführungsform kann das wenigstens eine Gehäuse-Verbindungsteil als separates Teil vorgefertigt sein oder werden. Auf diese Weise kann das wenigstens eine Gehäuse-Verbindungsteil auch in komplexen Formen realisiert werden. Das wenigstens eine Gehäuse-Verbindungsteil kann anschließend mit den anderen Bauteilen des Gehäuses, insbesondere einem Gehäusedeckel und/oder einem Gehäusetopf, verbunden werden.

Das wenigstens eine Gehäuse-Verbindungsteil des Wechselfilters kann auf bezüglich der Verbindungsachse axial gegenüberliegenden Seiten jeweils eine Funktionsfläche aufweisen. Wenigstens ein entsprechendes Kopf-Verbindungsteil der Verbindungseinrichtung aufseiten des Anschlusskopfs kann wenigstens eine Gegenfunktionsfläche aufweisen.

Die wenigstens eine Gegenfunktionsfläche kann zum Zusammenwirken wenigstens eine der Funktionsflächen des wenigstens einen Gehäuse-Verbindungsteils hintergreifen. Auf diese Weise kann zwischen der wenigstens einen Gegenfunktionsfläche und der entsprechenden Funktionsfläche eine Zugverbindung axial zur Verbindungsachse realisiert werden.

In einer weiteren vorteilhaften Ausführungsform ist die mindestens eine Dichtungseinrichtung, die mit einem entsprechenden Bauteil, insbesondere einer Dichtfläche, aufseiten des Anschlusskopfs zur Umgebung hin dichtend zusammenwirken kann, innerhalb des axialen Bereichs angeordnet, welcher durch das Gehäuse-Verbindungsteil definiert wird, insbesondere durch dessen axiale Erstreckung, bevorzugt die axiale Erstreckung dessen für die Verbindung wirksamen Bereichs, insbesondere definiert durch die axiale Erstreckung der Funktionsfläche. Dadurch werden Belastungen der Dichtung, die durch Kippen während des Betriebs entstehen können, minimiert.

Die wenigstens eine Gegenfunktionsfläche kann sich vorteilhafterweise zur Realisierung der bajonettartigen Verbindung umfangsmäßig bezüglich der Verbindungsachse erstrecken.

Vorteilhafterweise kann die umfangsmäßige Erstreckung der Bereiche der bajonettartigen Verbindungseinrichtung, in der im Schließzustand der Verbindungseinrichtung die wenigstens eine Gegenfunktionsfläche mit der entsprechenden wenigstens einen Funktionsfläche zusammenwirkt, wenigstens 50 %, bevorzugt mehr als 60 %, des Umfangs des Wechselfilters betragen. Auf diese Weise kann ein entsprechend großer Bereich realisiert werden, der kraftübertragend wirken kann. Ferner können die Kräfte zwischen dem Wechselfilter und dem Anschlusskopf umfangsmäßig gleichmäßiger und besser wirken. Außerdem können so insgesamt größere Kräfte übertragen werden. Die Stabilität der Verbindung mit der Verbindungseinrichtung kann so verbessert werden. Die mechanische Belastung der Verbindungseinrichtung kann so verringert werden. Dies kann sich positiv auf die Standzeiten auswirken.

Vorteilhafterweise kann die wenigstens eine Funktionsfläche wenigstens ein Rastelement, insbesondere einen Rastvorsprung oder einen Rastabschnitt, wenigstens einer Rastsicherung aufweisen. Vorteilhafterweise können die wenigstens eine Gegenfunktionsfläche und die wenigstens eine mit dieser zusammenwirkende Funktionsfläche jeweils wenigstens ein Rastelement, insbesondere einen Rastvorsprung oder einen Rastabschnitt, wenigstens einer Rastsicherung aufweisen, welche in der Schließposition der wenigstens einen Verbindungseinrichtung hintereinander, miteinander oder ineinander verrasten können. Mit der Rastsicherung kann eine Gefahr verringert werden, dass sich die Verbindungseinrichtung durch eine ungewünschte Drehung des Wechselfilters um die Verbindungsachse lösen kann. Zum Schließen und Lösen der wenigstens einen Rastsicherung können die entsprechenden Rastelemente durch die entsprechende Drehung des Wechselfilters voneinander getrennt oder aneinander vorbei geführt werden. Hierzu kann es erforderlich sein, entsprechende Rastkräfte zu überwinden. An einem derartigen erhöhten Kraftaufwand beim Anbau kann auch einfach erfasst werden, sobald der Wechselfilter in seiner korrekten Position ist.

Vorteilhafterweise kann die Verbindungseinrichtung wenigstens ein Vorspannelement aufweisen zur Realisierung einer mechanischen Vorspannung, mit der die wenigstens eine Gegenfunktionsfläche gegen die wenigstens eine Funktionsfläche gepresst werden kann. Auf diese Weise kann die Verbindungseinrichtung unter einer mechanischen Spannung gehalten werden. Betriebsbedingte Vibrationen können so gedämpft werden. Auch können betriebsbedingte Geräusche verringert werden. Insbesondere kann ein etwaiges Klappern verhindert werden. Ferner kann eine etwaige Rastkraft, welche zum Schließen oder Öffnen der Verrastung überwunden werden muss, erzeugt oder vergrößert werden.

Das wenigstens eine Vorspannelement kann vorteilhafterweise an dem Anschlusskopf angeordnet sein. Auf diese Weise kann es als Lebensbauteil ausgelegt sein. Es muss nicht gemeinsam mit dem Wechselfilter ausgetauscht werden. Alternativ oder zusätzlich kann wenigstens ein Vorspannelement an dem Gehäuse angeordnet sein. Es kann so gemeinsam mit dem Wechselfilter ausgetauscht werden.

Das wenigstens eine Vorspannelement kann vorteilhafterweise elastisch sein. Das wenigstens eine Vorspannelement kann aufgrund seiner Form und/oder seiner Materialzusammensetzung elastisch sein. Vorteilhafterweise kann das wenigstens eine Vorspannelement Kunststoff, insbesondere Elastomer, und/oder insbesondere elastisches Metall aufweisen oder daraus sein. Vorteilhafterweise kann das wenigstens eine Vorspannelement ein Federelement sein oder aufweisen.

Das wenigstens eine Vorspannelement kann zusätzlich eine Dichtungsfunktion ausüben. Das wenigstens eine Vorspannelement kann mit einer Dichtung oder Dichtungseinheit kombiniert sein oder umgekehrt. Zusätzlich oder alternativ kann das wenigstens eine Vorspannelement mit einer Rücklaufsperrmembran des Wechselfilters realisiert sein oder umgekehrt. Mit der Rücklaufsperrmembran kann vorteilhafterweise ein Durchlass des Gehäuses für Fluid, bevorzugt der wenigstens eine Einlass, in eine Strömungsrichtung verschließbar sein. Auf diese Weise kann ein Rücklauf des Fluids verhindert werden.

Gegebenenfalls kann eine Dichtung zwischen einer Rohseite und einer Reinseite des Wechselfilters, insbesondere eines Filterelements, angeordnet sein.

Das wenigstens eine Gehäuse-Verbindungsteil und/oder wenigstens ein Kopf-Verbindungsteil können jeweils mit einem Vergleich zu ihrer bezüglich der Verbindungsachse radialen und umfangsmäßigen Ausdehnung geringen Materialdicke realisiert sein. Die Materialdicken des wenigstens einen ersten Verbindungsteils und des wenigstens einen zweiten Verbindungsteils können ähnlich groß sein.

Vorteilhafterweise kann die Materialdicke des wenigstens einen Gehäuse-Verbindungsteils und/oder des wenigstens einen Kopf-Verbindungsteils vorteilhafterweise maximal 3 mm, bevorzugt zwischen 1 mm und 2 mm, sein.

Vorteilhafterweise kann die axiale Ausdehnung wenigstens eines Einführspalts maximal 3 mm, vorzugsweise zwischen 1 mm und 2 mm, sein.

Die Verbindungsteile können aus Halbzeug oder Formteilen entsprechend geformt, insbesondere gebogen, gefalzt, geknickt, geschnitten oder gestanzt oder dergleichen, sein. Auf diese Weise können gegebenenfalls die entsprechenden Rastabschnitte und (Gegen-)Führungsabschnitte realisiert werden.

Vorteilhafterweise kann radial innerhalb der ersten Verbindungsteile, die aus Halbzeug oder Formteilen geformt, insbesondere gebogen, gefalzt, geknickt, geschnitten oder gestanzt oder dergleichen, sind, wenigstens ein Teil des Halbzeugs oder der Formteile vorgesehen sein. Vorteilhafterweise ist der radial innerhalb des wenigstens einen Gehäuse-Verbindungsteils angeordnete Teil des Halbzeugs oder der Formteile in Umfangsrichtung geschlossen. Hierdurch kann die Stabilität der Verbindungseinrichtung und damit die Steifigkeit und Dauerbelastbarkeit der Verbindung zwischen den Verbindungseinrichtungen verbessert werden.

Die Verbindungseinrichtung kann vorteilhafterweise radial innerhalb wenigstens einer Umfangswand des Gehäuses und/oder des Anschlusskopfs angeordnet sein. Auf diese Weise kann die bajonettartige Verbindungseinrichtung zur Umgebung hin geschützt werden. Die Verbindungseinrichtung kann vorteilhafterweise in einem entsprechenden Verbindungsraum zwischen dem Gehäuse und dem Anschlusskopf angeordnet sein.

Vorteilhafterweise kann die wenigstens eine Gegenfunktionsfläche über eine möglichst große, bevorzugt ihre gesamte Ausdehnung in Umfangsrichtung und in radialer Richtung bezüglich der Verbindungsachse an der entsprechenden Funktionsfläche anliegen. Auf diese Weise kann eine Kraftübertragung zwischen den Verbindungsteilen verbessert werden. Entsprechende Führungskonturen der wenigstens einen Gegenfunktionsfläche können beim Öffnen und Schließen der Verbindungseinrichtung an den entsprechenden Führungskonturen der entsprechenden Funktionsfläche entlang gleiten. Auf diese Weise kann ein etwaiges Vorspannungselement und/oder eine Dichtung beim Verschließen der Verbindungseinrichtung axial komprimiert werden. Im Falle einer Dichtung kann so zusätzlich die Dichtfunktion verbessert werden.

Vorteilhafterweise können die wenigstens eine Gegenfunktionsfläche und die entsprechende mit ihr zusammenwirkende Funktionsfläche komplementär sein. Auf diese Weise können sie in der Schließposition der Verbindungseinrichtung flächig aneinander liegen. So kann eine Kraftübertragung verbessert werden. Eine Belastung auf die beteiligten Bauteile kann so weiter verringert werden. Die Bauteile können zur Übertragung gleicher Kräfte kleiner dimensioniert sein. Durch den aneinander angepassten Verlauf der Verbindungsteile können die axialen Ausdehnungen der Verbindungsteile entsprechend verringert werden. Vorteilhafterweise können die Verbindungsteile gegenseitig eingreifende Formteile sein. Die Konturen der wenigstens einen Gegenfunktionsfläche und der entsprechenden Funktionsfläche können beim Öffnen oder Schließen der Verbindungseinrichtung aneinander entlang gleiten.

Vorteilhafterweise können die wenigstens eine Gegenfunktionsfläche und/oder wenigstens die mit dieser zusammenwirkende Funktionsfläche jeweils einen etwa schraubenförmigen Verlauf um die Verbindungsachse haben. Auf diese Weise kann das Gehäuse-Verbindungsteil beim Drehen des Wechselfilters in Schließdrehrichtung mittels der Verbindungsteile gleichzeitig in axialer Richtung zu dem Anschlusskopf hingezogen werden. So kann eine kombinierte Dreh-/Steckbewegung realisiert werden. Die Steigungen der wenigstens eine Gegenfunktionsfläche und der wenigstens einen Funktionsfläche können vorteilhafterweise identisch sein.

Vorteilhafterweise können die Steigungen der Steigung eines üblichen Rechtsgewindes entsprechen. Auf diese Weise kann die Verbindungseinrichtung, wie insbesondere bei Kraftstofffiltern oder Ölfiltern üblich, durch Drehung des Wechselfilters im Rechtsdrehsinn geschlossen und in umgekehrter Richtung geöffnet werden.

Vorteilhafterweise kann eine Höhe axial zur Verbindungsachse, welche beim Schließen der bajonettartigen Verbindungseinrichtung zurückgelegt wird, mit einem axialen Abstand einer etwaigen Dichtung auf Seiten eines der Verbindungsteile von einer entsprechenden Dichtungsfläche auf Seiten des anderen Verbindungsteils entsprechen. Auf diese Weise kann durch die Dreh-/Steckverbindung beim Schließen der Verbindungseinrichtung die entsprechende Dichtung an der entsprechenden Dichtungsfläche positioniert werden.

Vorteilhafterweise können der Wechselfilter, insbesondere ein Gehäusedeckel und/oder eine Endscheibe eines etwaigen Filterelements, und der Anschlusskopf jeweils wenigstens ein Korrespondenzelement, insbesondere einen Stutzen, bevorzugt einen Anschlussstutzen und/oder Verbindungsstutzen und/oder Dichtungsstutzen und/oder Zylinderstutzen, aufweisen, welche bei montiertem Wechselfilter paarweise korrespondieren können. Vorteilhafterweise können Korrespondenzelemente, insbesondere die Stutzen, paarweise ineinandergreifen. Auf diese Weise können die Korrespondenzelemente radial bezüglich der Verbindungsachse relativ zueinander fixiert werden. Alternativ können die Korrespondenzelemente paarweise auf Stoß, insbesondere unter Zwischenlage einer Dichtungseinrichtung, angeordnet sein. Auf diese Weise können bezüglich der Verbindungsachse radiale Lagetoleranzen einfach kompensiert werden.

Vorteilhafterweise kann wenigstens ein Paar von Korrespondenzelementen einen fluidführenden Raum radial außen und/oder radial innen begrenzen.

Vorteilhafterweise kann wenigstens ein Paar von Korrespondenzelementen innerhalb wenigstens eines anderen Paares von Korrespondenzelementen angeordnet sein. Auf diese Weise kann in dem inneren Paar von Korrespondenzelementen ein erster fluidführender Bereich, insbesondere ein Auslasskanal für das Fluid, realisiert werden.

Zwischen dem inneren Paar von Korrespondenzelementen und dem äußeren Paar von Korrespondenzelementen kann vorteilhafterweise ein zweiter fluidführender Bereich, insbesondere ein Einlassringraum für das Fluid, realisiert werden.

Die Korrespondenzelemente, insbesondere die Paare von Korrespondenzelementen, können jeweils koaxial zur Verbindungsachse sein. Auf diese Weise können sie einfacher relativ zueinander positioniert werden. Ferner können so die fluidführenden Bereiche umfangsmäßig gleichmäßiger sein.

Wenigstens ein Paar von Korrespondenzelementen, insbesondere ein radial äußeres Paar von Korrespondenzelementen, kann vorteilhafterweise mehrere fluidführende Bereiche, insbesondere wenigstens einen Einlassbereich und wenigstens einen Auslassbereich für das Fluid, umfangsmäßig umgeben. Auf diese Weise können die entsprechenden fluidführenden Bereiche einfach mit nur einem Paar von Korrespondenzelementen zu Umgebung hin abgegrenzt werden. Hierbei können Kontaktbereiche zwischen den Korrespondenzelementen eines Paares gegebenenfalls mit nur einer einzigen Dichtungseinrichtung abgedichtet werden.

Vorteilhafterweise können die Verbindungsteile der Verbindungseinrichtung radial außerhalb des Paares von Korrespondenzelementen angeordnet sein, welches alle fluidführenden Bereiche umfangsmäßig umgeben kann. Auf diese Weise können die fluidführenden Bereiche mit nur einem Paar von Korrespondenzelementen, gegebenenfalls mit nur einer Dichtungseinrichtung, von dem Verbindungsteilen der Verbindungseinrichtung, bevorzugt auch von der Umgebung getrennt werden. Die Verbindungsteile der Verbindungseinrichtung kann so einfach vor Fluid geschützt werden.

Vorteilhafterweise kann zwischen den Korrespondenzelementen wenigstens eines Paares wenigstens eine Dichteinrichtung, insbesondere eine Ringdichtung, bevorzugt eine O-Ringdichtung oder eine kombinierte Dichtung-Rücklaufsperrmembran, angeordnet sein. So kann der mit dem wenigstens einen Paar von Korrespondenzelementen begrenzte fluidführende Bereich im Kontaktbereich der Verbindungsstutzen besser abgedichtet werden. Vorteilhafterweise kann eine Materialdicke des wenigstens einen Gehäuse-Verbindungsteils und/oder des wenigstens einen Kopf-Verbindungsteils in Umfangsrichtung zumindest im Bereich der wenigstens einen Funktionsfläche/Gegenfunktionsfläche jeweils konstant sein. So kann der insbesondere axiale Platzbedarf der Verbindungseinrichtung verringert werden.

Vorteilhafterweise kann das wenigstens eine Gehäuse-Verbindungsteil und/oder das wenigstens eine Kopf-Verbindungsteil aus Blech sein oder Blech aufweisen. Blech kann in der Regel in seinem Ausgangszustand als gewalztes Metall in Form von ebenen, flachen Tafeln oder Bändern vorliegen. Blech kann einfach mit einer gleichmäßigen Materialdicke realisiert werden. Aus Blech kann auch mit einer verhältnismäßig geringen Materialdicke ein mechanisch stabiles Verbindungsteil realisiert werden. Auf diese Weise kann der erforderliche Bauraum, insbesondere in axialer Richtung, der Verbindungseinrichtung verringert werden. Blech kann einfach verarbeitet oder bearbeitet, insbesondere gebogen, gefaltet, gestanzt, geschnitten oder geschweißt, werden. Mit Blech können einfach Verbindungen zwischen Bauteilen, insbesondere Bördelverbindungen oder Schweißverbindungen, realisiert werden. Vorteilhafterweise kann wenigstens eines der Verbindungsteile als Blechumformteil ausgeführt sein.

Vorteilhafterweise kann wenigstens eines der Verbindungsteile fest oder lösbar mit dem Wechselfilter verbunden sein. Wenigstens eines der Verbindungsteile kann fest oder lösbar mit dem Anschlusskopf verbunden sein. Das wenigstens eine Verbindungsteil kann mit dem Wechselfilter oder dem Anschlusskopf mittels einer stoffschlüssigen und/oder kraftschlüssigen und/oder formschlüssigen Verbindung, insbesondere mittels einer Bördelverbindung, einer Schweißverbindung, einer Klemmverbindung, einer Rastverbindung, einer Steckverbindung, einer Schraubverbindung und/oder einer Klebeverbindung, verbunden sein.

Vorteilhafterweise kann das wenigstens eine Gehäuse-Verbindungsteil mit dem Gehäusedeckel und/oder dem Gehäusetopf insbesondere mittels einer Bördelverbindung und/oder Schweißverbindung verbunden sein. Auf diese Weise kann das wenigstens eine Gehäuse-Verbindungsteil stabil mit dem Wechselfilter verbunden sein. Es kann so einfach mit diesem gemeinsam ausgetauscht werden.

Vorteilhafterweise kann das wenigstens eine Gehäuse-Verbindungsteil mittels einer zwischen dem Gehäusedeckel und dem Gehäusetopf ausgebildeten Bördelverbindung an dem Gehäuse gehalten sein. Alternativ oder zusätzlich kann vorteilhafterweise das Verbindungsteil mittels einer stoffschlüssigen Verbindung an dem Gehäusedeckel und/oder an dem Gehäusetopf befestigt sein.

Vorteilhafterweise kann der Gehäusedeckel unter Verwendung von Dichtungsmaterial, insbesondere Dichtmasse, dicht mit dem Gehäusetopf insbesondere mittels einer Bördelverbindung verbunden sein.

Vorteilhafterweise kann der Gehäusedeckel Blech aufweisen oder Blech sein.

Vorteilhafterweise kann eine Materialdicke des Gehäusedeckels zwischen etwa 0,4 mm und 1 mm betragen.

Vorteilhafterweise kann wenigstens ein Kopf-Verbindungsteil bevorzugt an den Anschlusskopf angeschraubt oder angeschweißt sein. Durch Verwendung einer Schraubverbindung kann das kopfseitige Verbindungsteil bei Bedarf einfach von dem Anschlusskopf gelöst werden.

Vorteilhafterweise kann der Gehäusedeckel insbesondere elastisch verformbar sein. Er kann so durch einen insbesondere beim Betrieb der Behandlungsvorrichtung in dem Gehäuse herrschenden Überdruck gegen den Anschlusskopf gepresst werden. Der Anschlusskopf kann so den Gehäusedeckel stützen. So können die Anforderungen an die Druckstabilität des Gehäusedeckels verringert werden. Der Gehäusedeckel kann so einfacher, insbesondere aus einfacheren Materialien, realisiert sein.

Vorteilhafterweise kann eine Mehrzahl von Funktionsflächen des wenigstens einen Gehäuse-Verbindungsteils und entsprechenden Gegenfunktionsflächen des wenigstens einen Kopf-Verbindungsteils bezüglich der Verbindungsachse umfangmäßig insbesondere gleichmäßig verteilt angeordnet sein. So kann eine umfangsmäßig insbesondere gleichmäßige Kraftübertragung verbessert werden. Ferner kann so insgesamt ein Drehwinkel, welcher erforderlich ist zum Schließen und Öffnen der Verbindungseinrichtung, verkleinert werden. Die umfangsmäßige Erstreckung jeder einzelnen Funktionsfläche/Gegenfunktionsfläche kann so geringer sein, als bei der Verwendung nur eines einzigen Paares aus einer Gegenfunktionsfläche und einer entsprechenden Funktionsfläche. Um eine vergleichbare gleichmäßige Kraftübertragung zu erreichen, müsste sich ein einziges Paar aus einer Gegenfunktionsfläche/Funktionsfläche wenigstens einmal über den gesamten Umfang erstrecken.

Vorteilhafterweise kann die Behandlungsvorrichtung eine Filtervorrichtung zur Filtrierung von flüssigen Fluiden, insbesondere Kraftstoff, Öl oder Wasser, sein. Die Filtervorrichtung kann vorteilhafterweise bei einer Brennkraftmaschine eingesetzt werden.

Vorteilhafterweise kann der Wechselfilter ein Ölwechselfilter oder ein Kraftstoffwechselfilter sein. Das Gehäuse des Wechselfilters kann dann ein Filtergehäuse sein. Der Wechselfilter kann als so genannter Spin-On Filter ausgestaltet sein. Vorteilhafterweise kann in dem Filtergehäuse wenigstens ein Filterelement so angeordnet sein, dass es den wenigstens einen Einlass von dem wenigstens einen Auslass trennen kann. Der Anschlusskopf kann vorteilhafterweise ein Filterkopf sein, an dem der Wechselfilter, insbesondere das Filtergehäuse, mittels der Verbindungseinrichtung lösbar montiert werden kann.

Ein Wechselfilter ist üblicherweise ein Filter, bei dem das wenigstens eine Filterelement gemeinsam mit dem Filtergehäuse ausgetauscht wird. In der Regel ist das wenigstens eine Filterelement fest in dem Filtergehäuse angeordnet. Entsprechend müssen die Verbindungen zwischen Gehäusetopf und Gehäusedeckel nicht zerstörungsfrei lösbar sein.

Die Erfindung ist nicht beschränkt auf eine Behandlungsvorrichtung einer Brennkraftmaschine eines Kraftfahrzeugs. Vielmehr kann sie auch bei andersartigen Brennkraftmaschinen, insbesondere Industriemotoren, eingesetzt werden. Die Erfindung kann auch bei andersartigen Behandlungsvorrichtungen für Fluid innerhalb oder außerhalb der Kraftfahrzeugtechnik verwendet werden. Die Erfindung kann auch bei Luftentölboxen, Trockenmittelboxen oder Wasserfiltern verwendet werden.

Die Aufgabe wird ferner bei der Behandlungsvorrichtung dadurch gelöst, dass ein Rand des Gehäusetopfs aufseiten des Gehäusedeckels wenigstens das wenigstens eine Gehäuse-Verbindungsteil bezüglich der Verbindungsachse axial außen überragt

Die in Verbindung mit dem erfindungsgemäßen Wechselfilter und dessen vorteilhafte Ausführungsformen aufgezeigten Vorteile und Merkmale gelten für die erfindungsgemäße Behandlungsvorrichtung und deren vorteilhafte Ausführungsformen entsprechend und umgekehrt.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: einen Längsschnitt einer Filtervorrichtung für Motoröl einer Brennkraftmaschine eines Kraftfahrzeugs, mit einem Filterkopf und einem Wechselfilter, der mittels einer lösbaren bajonettartigen Verbindungseinrichtung mit dem Filterkopf verbunden ist;
- Figur 2: einen Längsschnitt des Wechselfilters aus der Figur 1;
- Figur 3: eine Detailansicht des Längsschnitts der Filtervorrichtung aus der Figur 1 im Bereich der Verbindungseinrichtung;
- Figur 4: eine Detailansicht des Längsschnitts des Wechselfilters aus der Figur 2 im Bereich der Verbindungseinrichtung;
- Figur 5: eine isometrische Darstellung der Filtervorrichtung aus der Figur 1;
- Figur 6: eine isometrische Darstellung des Wechselfilters der Filtervorrichtung aus der Figur 1;
- Figur 7: eine isometrische Darstellung des Filterkopfs der Filtervorrichtung aus der Figur 1.

In den Figuren sind gleiche Bauteile mit gleichen Bezugszeichen versehen.

### Ausführungsform(en) der Erfindung

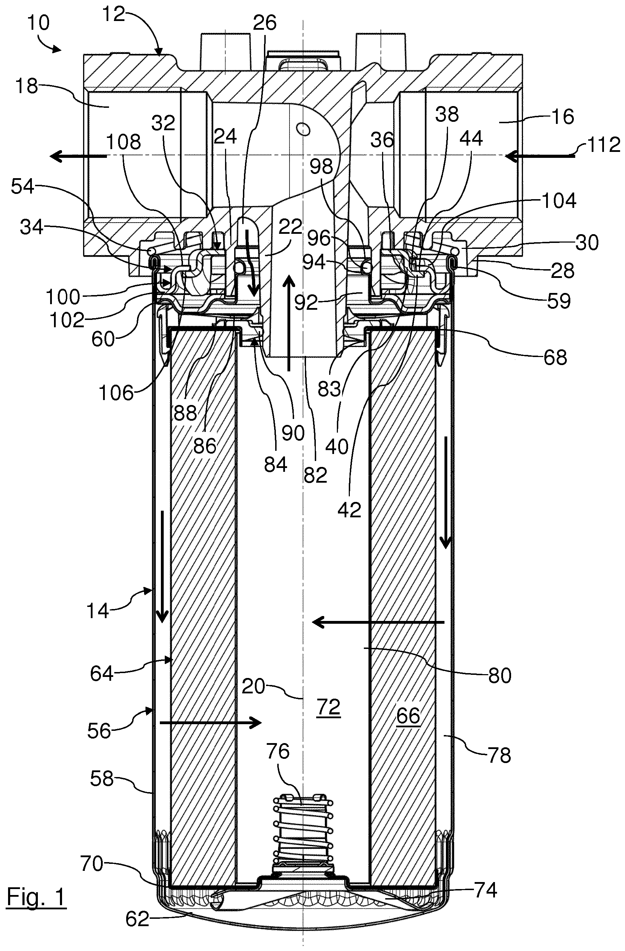

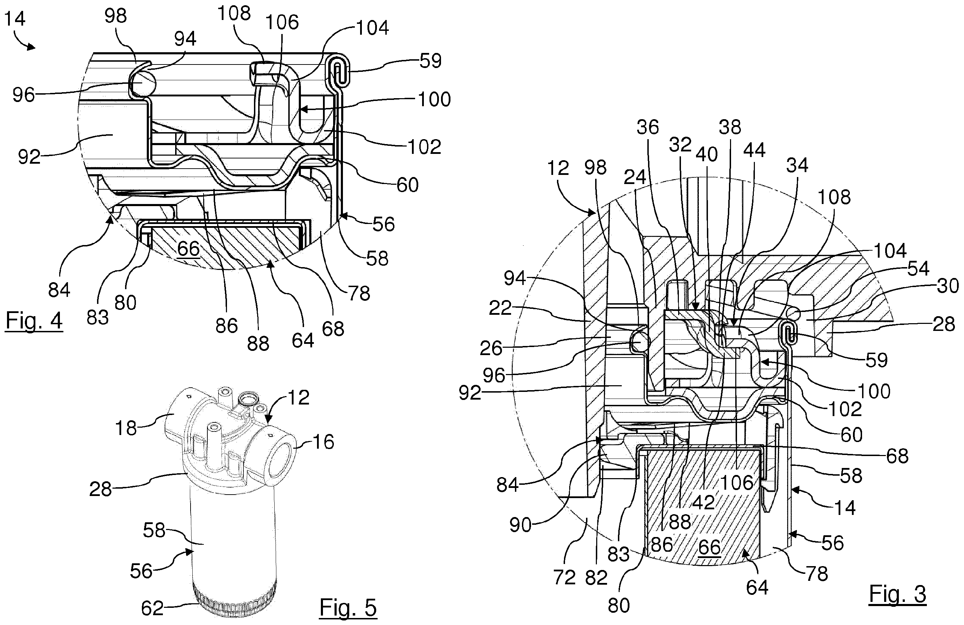

In den Figuren 1 bis 7 ist eine Filtervorrichtung 10 für Motoröl eines Motorölkreislaufs einer Brennkraftmaschine eines Kraftfahrzeugs und deren Komponenten in unterschiedlichen Perspektiven, Schnitten und Detailansichten gezeigt. Die Filtervorrichtung 10 dient zur Reinigung des Motoröls.

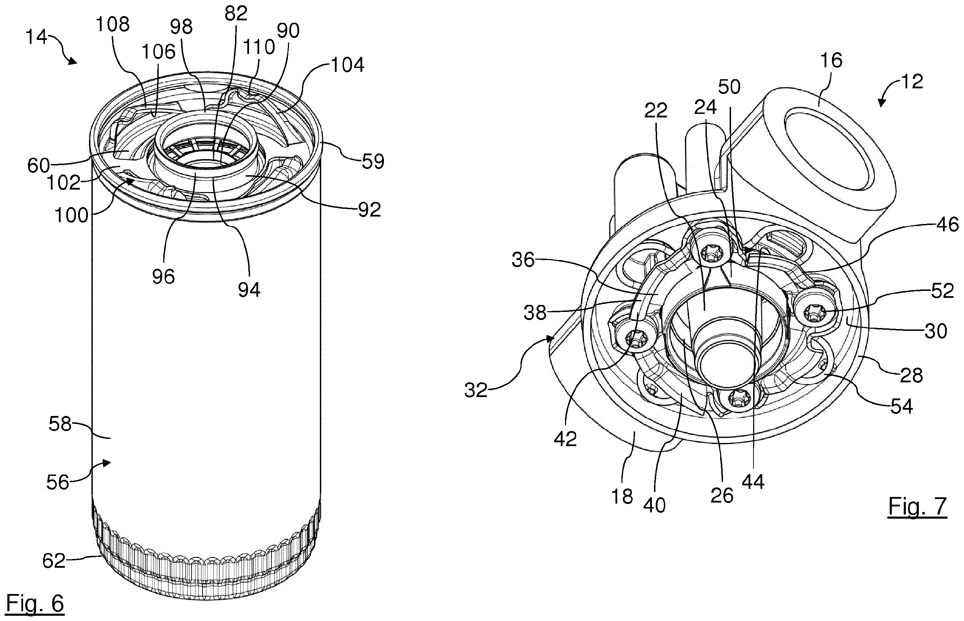

Die Filtervorrichtung 10 umfasst einen Filterkopf 12, an dem ein Wechselfilter 14 lösbar befestigt ist. Der Filterkopf 12 ist fest mit der Brennkraftmaschine verbunden und dient als Anschlussteil für den Wechselfilter 14. Der Filterkopf 12 ist im Detail in der Figur 7 gezeigt. Der Filterkopf 12 umfasst einen Zulauf 16 und einen Ablauf 18 für das Motoröl. Der Zulauf 16 und der Ablauf 18 sind in hier nicht weiter interessierender Weise mit entsprechenden Ölleitungen der Brennkraftmaschine verbunden.

Der Filterkopf 12 weist ferner einen bezüglich einer Verbindungsachse 20 koaxialen radial inneren Anschlussstutzen 22 auf.

Wenn im Folgenden von "axial", "radial", "koaxial", "umfangsmäßig" oder dergleichen die Rede ist, so bezieht sich dies, sofern nicht anders erwähnt, auf die Verbindungsachse 20. Im gezeigten Ausführungsbeispiel fällt die Verbindungsachse 20 mit einer Filterachse des Wechselfilters 14 zusammen.

Der innere Anschlussstutzen 22 ist etwa kreiszylindrisch. Er erstreckt sich auf der Seite des Filterkopfs 12, welche dem Wechselfilter 14 zugewandt ist. Er ist an beiden Enden offen. Auf seiner dem Wechselfilter 14 abgewandten Seite ist der innere Anschlussstutzen 22 fluidtechnisch mit dem Ablauf 18 verbunden.

Der innere Anschlussstutzen 22 ist koaxial von einem kreiszylindrischen radial äußeren Anschlussstutzen 24 umgeben. Der innere Anschlussstutzen 22 überragt auf der dem Wechselfilter 14 zugewandten Seite den äußeren Anschlussstutzen 24 in axialer Richtung.

Der innere Anschlussstutzen 22 und der äußere Anschlussstutzen 24 begrenzen jeweils umfangsseitig einen koaxialen Einlassringraum 26. Der Einlassringraum 26 ist über eine Fluidverbindung mit dem Zulauf 16 verbunden.

Der innere Anschlussstutzen 22 und der äußere Anschlussstutzen 24 sind koaxial von einer kreiszylindrischen Umfangswand 28 umgeben. Der freie Rand des äußeren Anschlussstutzens 24 überragt in axialer Richtung betrachtet den dem Wechselfilter 14 zugewandten freien Rand der Umfangswand 28. Die Umfangswand 28 bildet die radial äußere Begrenzung des Filterkopfs 12 auf der dem Wechselfilter 14 zugewandten Seite. Die Umfangswand 28 und der äußere Anschlussstutzen 24 begrenzen jeweils umfangsseitig einen ringförmigen koaxialen Verbindungsraum 30. Der Verbindungsraum 30 ist zur Umgebung hin offen.

In dem Verbindungsraum 30 ist ein Kopf-Verbindungsteil 32 einer lösbaren bajonettartigen Verbindungseinrichtung 34 angeordnet. Mit der Verbindungseinrichtung 34 ist der Wechselfilter 14 lösbar an dem Filterkopf 12 befestigt. Das insgesamt etwa ringförmige Kopf-Verbindungsteil 32 ist aus Blech geformt. Die Dicke des Blechs ist konstant etwa 2 bis 3 mm.

Radial innen weist das Kopf-Verbindungsteil 32 einen ringförmigen Kopf-Montageabschnitt 36 auf. Der Kopf-Montageabschnitt 36 stößt mit seiner radial inneren Umfangsseite etwa an die radial äußere Umfangsseite des äußeren Anschlussstutzens 24. Der Kopf-Montageabschnitt 36 erstreckt sich etwa in einer Ebene radial und umfangsmäßig. Das Kopf-Verbindungsteil 32 erstreckt sich radial etwa über ein Drittel des Verbindungsraums 30.

Der Kopf-Montageabschnitt 36 geht in vier kopfseitige Bajonettabschnitte 38 über. Die kopfseitigen Bajonettabschnitte 38 sind in Form und Größe identisch. Die kopfseitigen Bajonettabschnitte 38 sind umfangsmäßig gleichmäßig verteilt angeordnet. Die kopfseitigen Bajonettabschnitte 38 weisen jeweils einen Umfangsabschnitt 40 auf, welcher sich im Wesentlichen umfangsmäßig parallel zu einem gedachten Kreiszylindermantel um die Verbindungsachse 20 erstreckt. Die Umfangsabschnitte 40 gehen auf ihren dem Kopf-Montageabschnitt 36 abgewandten Seiten jeweils in einen Funktionsabschnitt 42 über. Die Umfangsabschnitte 40 verbinden also die Kopf-Montageabschnitt 36 mit den jeweiligen Funktionsabschnitten 42. Die Funktionsabschnitte 42 sind insbesondere in der Figur 7 gut sichtbar. Die Funktionsabschnitte 42 weisen jeweils auf ihren dem Wechselfilter 14 abgewandten Rückseiten eine Gegenfunktionsfläche 44 auf.

Die Funktionsabschnitte 42, insbesondere die Gegenfunktionsflächen 44, haben jeweils einen etwa schraubenförmigen Verlauf um die Verbindungsachse 20. Die Steigung der Gegen-funktionsflächen 44 und der Funktionsabschnitte 42 entsprechen etwa der Steigung eines üblichen Rechtsgewindes. Vom Wechselfilter 14 aus axial betrachtet sind die im Uhrzeigersinn vorderen Enden der Funktionsabschnitte 42 betrachtet jeweils näher an dem Wechselfilter 14 als die im Uhrzeigersinn hinteren Enden. Zwischen den vorderen Enden der Funktionsabschnitte 42 und der Ebene des Kopf-Montageabschnitts 36 besteht jeweils eine Lücke, durch die entsprechende, weiter unten näher erläuterte, gehäuseseitige Bajonettabschnitte 104 eingeführt werden können.

Das Blech des Kopf-Verbindungsteils 32 ist im Kopf-Montageabschnitt 36, in den Umfangsabschnitten 40 und in den Funktionsabschnitten 42 gleich dick. Dies bedeutet auch, dass es in dem Kopf-Montageabschnitt 36 und in den Funktionsabschnitten 42 eine gleichmäßige axiale Ausdehnung hat.

Die Funktionsabschnitte 42 weisen jeweils einen kopfseitigen Rastvorsprung 46 auf. Die Rastvorsprünge 46 sind als jeweilige Biegungen in den Gegenfunktionsflächen 44 realisiert. Die Rastvorsprünge 46 erheben sich axial auf der dem Wechselfilter 14 zugewandten Seite.

Das Kopf-Verbindungsteil 32 ist an dem Kopf-Montageabschnitt 36 mit insgesamt vier Schrauben 52, wie in der Figur 7 gezeigt, von der dem Wechselfilter 14 zugewandten Seite an dem Filterkopf 12 befestigt. Die Schrauben 52 befinden sich jeweils zwischen einem im Uhrzeigersinn hinteren Ende eines der kopfseitigen Bajonettabschnittes 38 vor dem im Uhrzeigersinn vorderen Ende des nächsten kopfseitigen Bajonettabschnitts 38.

Im Verbindungsraum 30 ist ferner eine Vorspannfeder 54 angeordnet. Die Vorspannfeder 54 ist in axialer Richtung federelastisch biegsam.

Der Wechselfilter 14 ist als Spin-On-Filter mit einem runden Querschnitt ausgelegt. Er ist im Wesentlichen koaxial zur Verbindungsachse 20. Der Wechselfilter 14 weist ein Filtergehäuse 56 mit einem Gehäusetopf 58 auf, in dessen offener Seite ein Gehäusedeckel 60 mit seinem radial äußeren Rand mittels einer Bördelverbindung befestigt ist. Die Bördelverbindung bildet einen Bördelrand 59 des Gehäusetopfs 58. Ein radial äußerer Durchmesser des Filtergehäuses 56 im Bereich des Bördelrandes 59 ist kleiner als ein radial innerer Durchmesser der Umfangswand 28 des Filterkopfs 12. Der Gehäusetopf 56 hat einen nach außen gewölbten Gehäuseboden 62. Der Gehäusedeckel 60 und der Gehäusetopf 58 sind aus Metall.

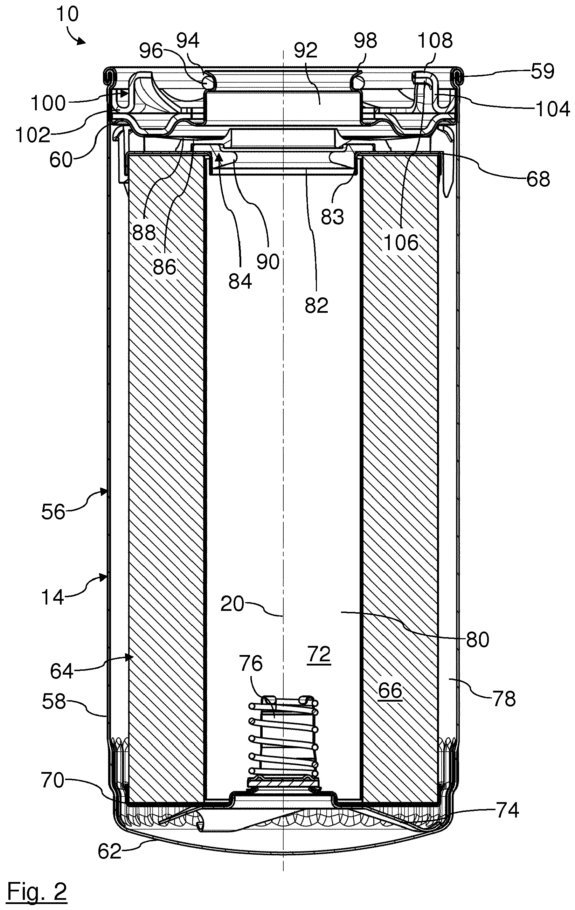

In dem Gehäusetopf 58 ist ein koaxiales Filterelement 64 angeordnet. Das Filterelement 64 verfügt über ein zu einem Filterbalg 66 gefaltetes, umfangsmäßig geschlossenes Filtermedium. An seinen Stirnseiten ist der Filterbalg 66 jeweils dicht mit einer Anschlussendscheibe 68, in den Figuren 1 und 2 oben, und einer Gegenendscheibe 70, unten, verbunden. Die Anschlussendscheibe 68 befindet sich auf der dem Gehäusedeckel 60 zugewandten Seite des Filterelements 64.

Der Filterbalg 66 umgibt einen Elementinnenraum 72 des Filterelements 64. Der Elementinnenraum 72 befindet sich auf einer Reinseite des Filterelements 64.

Die Gegenendscheibe 70 verschließt den Elementinnenraum 72 auf der dem Gehäuseboden 62 zugewandten Stirnseite des Filterelements 64. An der dem Gehäuseboden 62 zugewandten Außenseite der Gegenendscheibe 70 stützen sich mehrere Federelemente 74 ab, die sich andererseits am Gehäuseboden 62 abstützen.

In der Gegenendscheibe 70 ist ein federbelastetes Umgehungsventil 76 angeordnet, welches im Öffnungszustand, unter hier nicht weiter interessierten Bedingungen, eine Ölströmung von Motoröl vom Gehäuseboden 62 direkt unter Umgehung des Filtermediums in den Elementinnenraum 72 zulässt. Das Umgehungsventil 76 ist der Figur 1 in seiner Schließstellung gezeigt.

Das Filterelement 64 ist radial außen von einem rohseitigen Ringraum 78 umgeben, der von der radial inneren Umfangsseite des Gehäusetopfs 58 begrenzt wird.

Im Elementinnenraum 72 erstreckt sich ferner ein koaxiales Mittelrohr 80 zwischen der Gegenendscheibe 70 und der Anschlussendscheibe 68. Eine Umfangswand des Mittelrohrs 80 ist für das Motoröl durchlässig. Eine radial innere Umfangsseite, nämlich radial innere Faltkanten, des Filterbalgs 66 können sich an der radial äußeren Umfangsseite des Mittelrohrs 80 abstützen. Die Anschlussendscheibe 68 weist eine koaxiale Auslassöffnung 82 für das filtrierte Motoröl auf. An der radial inneren Umfangsseite ist die Anschlussendscheibe 68 zu einem koaxialen Zylinderstutzen 83 geformt, welcher sich axial in den Elementinnenraum 72 erstreckt.

An der axial dem Elementinnenraum 72 abgewandten Seite ist an der Stirnseite des Filterelements 64 eine zweiteilige ringförmige koaxiale innere Dichtungseinheit 84 befestigt. Die innere Dichtungseinheit 84 besteht aus einem Elastomer.

Radial außen weist ein erster Teil der inneren Dichtungseinheit 84 eine Rücklaufsperrmembran 86 auf. Die Rücklaufsperrmembran 86 ist ringförmig und umgibt die Auslassöffnung 82 radial außen. Die Rücklaufsperrmembran 86 liegt unter einer mechanischen Vorspannung an der dem Filterbalg 66 zugewandten Innenseite des Gehäusedeckels 60 an. Sie verschließt, wie in den Figuren 1 bis 4 gezeigt, im druckfreien Zustand eine koaxiale ringförmige Einlassöffnung 88 des Gehäusedeckels 60 für Motoröl. Sobald Motoröl der Filtervorrichtung 10 zugeführt wird, öffnet die Rücklaufsperrmembran 86 aufgrund des Öldrucks in Durchlassrichtung. Ein Rücklauf des Motoröls durch die Einlassöffnung 88 wird durch die Rücklaufsperrmembran 86 verhindert.

Ein zweiter Teil der inneren Dichtungseinheit 84 bildet radial innen eine koaxiale innere Ringdichtung 90. Die innere Ringdichtung 90 kann sich mit ihrer radial äußeren Umfangsseite an der radial inneren Umfangsseite des Zylinderstutzens 83 abstützen. Die innere Ringdichtung 90 liegt bei montiertem Wechselfilter 14 mit ihrer radial inneren Umfangsseite dicht an einer als Dichtfläche ausgelegten radial äußeren Umfangsseite des radial inneren Anschlussstutzens 22 an. Mit der inneren Ringdichtung 90 wird im Bereich der Einlassöffnung 88 die Reinseite des Wechselfilters 14 von seiner Rohseite getrennt.

Der Gehäusedeckel 60 weist einen abgestuften koaxialen äußeren Dichtungsstutzen 92 auf. Eine Einschnürung des äußeren Dichtungsstutzens 92 an seinem dem Filterbalg 66 axial abgewandten Ende bildet eine äußere Dichtungsnut 94 für eine äußere Ringdichtung 96. Die äußere Ringdichtung 96 ist als O-Ring ausgelegt. Die Dichtungsnut 94 ist nach radial außen offen.

Ein radial äußerer Durchmesser des äußeren Dichtungsstutzens 92 außerhalb des Bereiches der Dichtungsnut 94 entspricht etwa dem radial inneren Durchmesser des äußeren Anschlussstutzens 24 des Filterkopfs 12. Bei montiertem Wechselfilter 14 steckt der Dichtungsstutzen 92 in dem äußeren Anschlussstutzens 24. Die radial äußere Umfangsseite des äußeren Dichtungsstutzens 92 liegt dann an der radial inneren Umfangsseite des radial äußeren Anschlussstutzens 24 an.

Die äußere Dichtungsnut 94 ist auf ihrer dem Filterbalg 66 axial abgewandten Seite mit einem Abdeckabschnitt 98 bedeckt. Der Abdeckabschnitt 98 ist einstückig mit dem äußeren Dichtungsstutzen 92 verbunden beziehungsweise Teil des Selbigen. Der Bördelrand 59 des Gehäusetopfs 58 überragt den Dichtungsstutzen 92 mit dem Abdeckabschnitt 98 axial außen. Der Dichtungsstutzen 92, die Dichtungsnut 94 und der Abdeckabschnitt 98 bilden eine Dichtungsaufnahme für die äußere Ringdichtung 96. In der Dichtungsnut 94 wird die Ringdichtung 96 verliersicher gehalten.

Bei montiertem Wechselfilter 14 liegt die äußere Ringdichtung 96 an der als Dichtungsfläche ausgelegten radial inneren Umfangsseite des radial äußeren Anschlussstutzens 24 radial dichtend an. Die äußere Ringdichtung 96 trennt so den ölführenden Bereich der Filtervorrichtung 10 von dem Verbindungsraum 30 und von der Umgebung.

Ein ringförmiges koaxiales Gehäuse-Verbindungsteil 100 der Verbindungseinrichtung 34 ist aus Blech geformt. Das Gehäuse-Verbindungsteil 100 ist als separates Bauteil vorgefertigt. Eine Dicke des Blechs des Gehäuse-Verbindungsteils 100 entspricht etwa der Dicke des Blechs des Kopf-Verbindungsteils 31.

Das Gehäuse-Verbindungsteil 100 erstreckt sich radial von der radial äußeren Umfangsseite des Gehäusedeckels 60 bis etwa zur radialen Mitte des Verbindungsraums 30. Das Gehäuse-Verbindungsteil 100 überlappt das Kopf-Verbindungsteil 32. Der Bördelrand 59 des Gehäusetopfs 58 überragt das Gehäuse-Verbindungsteil 100 axial außen.

Das Gehäuse-Verbindungsteil 100 weist einen Gehäuse-Montageabschnitt 102 auf, welcher sich umfangsmäßig erstreckt. Der Gehäuse-Montageabschnitt 102 ist radial außen axial zwischen dem Gehäusedeckel 60 und dem Bördelrand 59 des Gehäusetopfs 58 mit dem Gehäusedeckel 60 fixiert.

Der Gehäuse-Montageabschnitt 102 geht auf seiner radial inneren Seite in vier identische gehäuseseitige Bajonettabschnitte 104 über. Die gehäuseseitigen Bajonettabschnitte 104 sind umfangsmäßig gleichmäßig verteilt angeordnet. Sie haben etwa die Form und Größe der kopfseitigen Bajonettabschnitte 38. Die höchsten Stellen der gehäuseseitigen Bajonettabschnitte 104 befinden sich axial betrachtet etwa auf gleicher Höhe mit dem Abdeckabschnitt 98 des äußeren Dichtungsstutzens 92. Die höchsten Stellen der gehäuseseitigen Bajonettabschnitte 104 und damit des Gehäuse-Verbindungsteils 100 werden axial außen von dem Bördelrand 59 überragt.

Die gehäuseseitigen Bajonettabschnitte 104 weisen auf axial gegenüberliegenden Seiten eine innere Funktionsfläche 106 und eine äußere Funktionsfläche 108 auf. Die Funktionsflächen 106 und 108 erstrecken sich entgegengesetzt zu den Gegenfunktionsflächen 44 jeweils etwa schraubenförmig um die Verbindungsachse 20 mit der gleichen Steigung wie die Gegenfunktionsflächen 44.

Die inneren Funktionsflächen 106 befinden sich auf der dem Gehäusedeckel 60 zugewandten Seite des jeweiligen gehäuseseitigen Bajonettabschnitts 104. Die äußeren Funktionsflächen 108 befinden sich entsprechend auf der axial gegenüberliegenden Seite. Im Schließzustand der Verbindungseinrichtung 34 werden die äußeren Funktionsflächen 108 jeweils zum Zusammenwirken von einer der Gegenfunktionsfläche 44 eines der kopfseitigen Bajonettabschnitte 38 hintergriffen. Dabei liegen die inneren Funktionsflächen 106 jeweils flächig an den entsprechenden Gegenfunktionsflächen 44 an.

Die gehäuseseitigen Bajonettabschnitte 104 weisen jeweils einen gehäuseseitigen Rastvorsprung 110 auf. Die Rastvorsprünge 110 erheben sich axial zu dem Gehäusedeckel 60. Bei montiertem Wechselfilter 14 verrasten die gehäuseseitigen Rastvorsprünge 110 hinter den entsprechenden kopfseitigen Rastvorsprüngen 46.

Zum Anbau wird der Wechselfilter 14 mit dem Gehäusedeckel 60 voran koaxial auf die Anschlussseite des Filterkopfs 12 gesteckt.

Spätestens wenn der Abdeckabschnitt 98 an der Stirnseite des radial äußeren Anschlussstutzens 24 des Filterkopfs 12 und/oder das Gehäuse-Verbindungsteil 100 an dem Kopf-Verbindungsteil 32 ankommt, wird der Wechselfilter 14 zusätzlich im Rechtsdrehsinn, welcher der Schließdrehsinn der Verbindungseinrichtung 34 ist, um die Verbindungsachse 20 gedreht.

Sobald die freien Enden der gehäuseseitigen Bajonettabschnitte 104 im Bereich der entsprechenden freien Enden der kopfseitigen Bajonettabschnitte 38 positioniert sind, beginnt die Führung der jeweiligen äußeren Funktionsflächen 108 von außen und der jeweiligen inneren Funktionsflächen 106 entlang der entsprechenden Gegenfunktionsflächen 44. Die Vorspannfedern 54 stützen sich an dem Gehäuse-Verbindungsteil 100, und/oder bevorzugt am Rand, insbesondere am Bördelrand 59 des Gehäusetopfs 58, in axialer Richtung ab. Durch den mit der schraubenförmigen Steigung der Gegenfunktionsfläche 44 und der inneren Funktionsfläche 106 erreichten Zug in axialer Richtung zwischen den Bajonettabschnitten 38 und 104 werden die innere Ringdichtung 90 auf den radial inneren Anschlussstutzen 22 und die äußere Ringdichtung 96 in den radial äußeren Anschlussstutzen 24 gezogen.

Sobald die gehäuseseitigen Rastvorsprünge 110 an den entsprechenden kopfseitigen Rastvorsprüngen 46 anstoßen, muss zum Weiterdrehen eine entsprechende Rastkraft überwunden werden. Die Rastkraft wird durch die Rückstellkraft der Vorspannfeder 54 mit realisiert.

Nach Überwinden der Rastkraft verrasten die gehäuseseitigen Rastvorsprünge 110 hinter den gehäuseseitigen Rastvorsprüngen 46 und sichern somit die Verbindungseinrichtung 34 gegen ungewolltes Öffnen.

Zum Trennen des Wechselfilters 14 von dem Filterkopf 12 wird der Wechselfilter 14 im Linksdrehsinn, also in Öffnungsdrehsinn, um die Verbindungsachse 20 gedreht. Hierzu müssen zunächst die Rastkraft der gehäuseseitigen Rastvorsprünge 110 mit den kopfseitigen Rastvorsprüngen 46 überwunden werden.

Unter der Federvorspannung der Vorspannfeder 54 werden die inneren Funktionsflächen 106 entlang der entsprechenden Gegenfunktionsflächen 44 geführt.

Sobald nach weiterer Drehbewegung die gehäuseseitigen Bajonettabschnitte 104 die entsprechenden kopfseitigen Einführspalte 50 verlassen, wird der Wechselfilter 14 mit einer axialen Bewegung von dem Filterkopf 12 abgezogen.

Beim Betrieb der Filtervorrichtung 10, also beim Betrieb der Brennkraftmaschine, strömt zu reinigendes Motoröl durch den Zulauf 16, in Figur 1 angedeutet durch einen Pfeil 112, in den Einlassringraum 26. Von dort aus strömt das Motoröl durch die Einlassöffnung 88 unter Freigabe durch die Rücklaufsperrmembran 86 in den rohseitigen Ringraum 78 des Filtergehäuses 56. Das zu reinigende Motoröl durchströmt den Filterbalg 66 von radial außen nach radial innen und gelangt durch umfangsseitige Öffnungen des Mittelrohrs 88 in den Elementinnenraum 72. Vom Elementinnenraum 72 gelangt das gereinigte Motoröl durch die Auslassöffnung 82 und den radial inneren Anschlussstutzen 22 des Filterkopfs 12 zum Ablauf 18. Das gereinigte Motoröl verlässt den Filterkopf 12 und damit die Filtervorrichtung 10 durch den Ablauf 18.

## Patentansprüche

1. Wechselfilter (14) für eine Behandlungsvorrichtung (10), insbesondere einer Filtervorrichtung zur Behandlung, insbesondere Filtrierung, von insbesondere flüssigen Fluiden, insbesondere Kraftstoff, Öl oder Wasser, insbesondere einer Brennkraftmaschine, insbesondere eines Kraftfahrzeugs, welcher ein Gehäuse (56) aufweist mit einem Gehäusetopf (58), einem Gehäusedeckel (60), wenigstens einem Einlass (88) für das zu behandelnde Fluid und wenigstens einem Auslass (82) für das behandelte Fluid, wobei der Wechselfilter (14) mittels einer lösbaren bajonettartigen Verbindungseinrichtung (34) unter Ausführung einer Dreh-/Steckbewegung um eine Verbindungsachse (20) der Behandlungsvorrichtung (10) mit einem Anschlusskopf (12) der Behandlungsvorrichtung (10) verbunden werden kann und die Verbindungseinrichtung (34) wenigstens ein Gehäuse-Verbindungsteil (100) auf Seiten des Gehäuses (56) aufweist, das zum Verbinden der Verbindungseinrichtung (34) mit wenigstens einem Kopf-Verbindungsteil (32) auf Seiten des Anschlusskopfs (12) zusammenwirken kann, wobei der wenigstens eine Einlass (88) mit wenigstens einem Zulauf (16) des Anschlusskopfs (12) für das zu behandelnde Fluid und/oder der wenigstens eine Auslass (82) mit wenigstens einem Ablauf (18) des Anschlusskopfs (12) für das behandelnde Fluid verbunden werden kann, wobei das wenigstens eine Gehäuse-Verbindungsteil (100) auf bezüglich der Verbindungsachse (20) axial gegenüberliegenden Seiten jeweils eine Funktionsfläche (106, 108) aufweist, wobei der Wechselfilter (14) aufseiten des Gehäusedeckels (60) wenigstens eine Dichtungseinrichtung (92, 94, 96, 98) aufweist, die mit einem entsprechenden Bauteil (24), insbesondere einer Dichtfläche, aufseiten des Anschlusskopfs (12) zur Umgebung hin dichtend zusammenwirken kann, wobei die wenigstens eine Dichtungseinrichtung (92, 94, 96, 98) bezüglich der Verbindungsachse (20) radial innerhalb des wenigstens einen Gehäuse-Verbindungsteils (100) angeordnet ist, **dadurch gekennzeichnet, dass** ein Rand (59) des Gehäusetopfs (58) aufseiten des Gehäusedeckels (60) wenigstens das wenigstens eine Gehäuse-Verbindungsteil (100) und die wenigstens eine Dichtungseinrichtung (92, 94, 96, 98) bezüglich der Verbindungsachse (20) axial außen überragt.

2. Wechselfilter nach Anspruch 1, **dadurch gekennzeichnet, dass** der Rand (59) des Gehäusetopfs (58) die wenigstens eine Dichtungseinrichtung (92, 94, 96, 98) maximal um 15 mm, insbesondere maximal um 10 mm, bevorzugt maximal um 5 mm, überragt und dass der Rand (59) das wenigstens eine Gehäuse-Verbindungsteil (100) bezüglich der Verbindungsachse (20) maximal um 15 mm, insbesondere maximal um 10 mm, bevorzugt maximal um 5 mm, überragt.

3. Wechselfilter nach einem der vorigen Ansprüche, **dadurch gekennzeichnet, dass** wenigstens ein Teil der wenigstens einen Dichtungseinrichtung (92, 94, 96, 98) mit dem Gehäusedeckel (60) insbesondere einstückig verbunden ist.

4. Wechselfilter nach einem der vorigen Ansprüche, **dadurch gekennzeichnet, dass** die wenigstens eine Dichtungseinrichtung (92, 94, 96, 98) wenigstens eine Dichtung (96) aufweist.

5. Wechselfilter nach einem der vorigen Ansprüche, **dadurch gekennzeichnet, dass** wenigstens eine Funktionsfläche (106, 108) einen etwa schraubenförmigen Verlauf um die Verbindungsachse (20) hat.

6. Wechselfilter nach einem der vorigen Ansprüche, **dadurch gekennzeichnet, dass** wenigstens ein Gehäuse-Verbindungsteil (100) wenigstens ein Teil einer schraubenförmigen bajonettartigen Verbindungseinrichtung (34) aufweist oder mit bildet.

7. Wechselfilter nach einem der vorigen Ansprüche, **dadurch gekennzeichnet, dass** das wenigstens eine Gehäuse-Verbindungsteil (100) als separates Teil vorgefertigt ist oder werden kann.

8. Behandlungsvorrichtung (10), insbesondere Filtervorrichtung zur Behandlung, insbesondere Filtrierung, von insbesondere flüssigen Fluiden, insbesondere Kraftstoff, Öl oder Wasser, insbesondere einer Brennkraftmaschine, insbesondere eines Kraftfahrzeugs, mit wenigstens einem Wechselfilter (14) nach einem der vorigen Ansprüche, und mit einem Anschlusskopf (12), der wenigstens einen Zulauf (16) für das zu behandelnde Fluid, der mit dem wenigstens einen Einlass (88) verbindbar ist, und/oder wenigstens einen Ablauf (18) für das behandelte Fluid, der mit dem wenigstens einen Auslass (82) verbindbar ist, aufweist, wobei der Anschlusskopf (12) und der Wechselfilter (14) mittels einer lösbaren bajonettartigen Verbindungseinrichtung (34) unter Ausführung einer Dreh-/Steckbewegung um eine Verbindungsachse (20) der Behandlungsvorrichtung (10) miteinander verbunden werden können und die Verbindungseinrichtung (34) wenigstens ein Kopf-Verbindungsteil (32) auf Seiten des Anschlusskopfs (12) aufweist, das zum Verbinden der Verbindungseinrichtung (34) mit dem Gehäuse-Verbindungsteil (100) auf Seiten des Gehäuses (56) zusammenwirken kann.

## Claims

1. Spin-on filter (14) for a treatment apparatus (10), in particular filter apparatus for treating, in particular filtering, in particular liquid fluids, in particular fuel, oil or water, in particular of an internal combustion engine, in particular of a motor vehicle, which features a housing (56) with a housing pot (58), a housing cover (60), at least one inlet (88) for the fluid to be treated and at least one outlet (82) for the treated fluid, wherein the spin-on filter (14) can be connected to a connecting head (12) of the treatment apparatus (10) using a releasable bayonet-type connecting means (34) by executing a rotary/plug-in movement around a connecting axis (20) of the treatment apparatus (10) and the connecting means (34) features at least one housing connecting part (100) on the side of the housing (56), which can interact for connecting the connecting means (34) to the at least one head connecting part (32) on the side of the connecting head (12), wherein the at least one inlet (88) is connectable to at least one inflow (16) of the connecting head (12) for the fluid to be treated and/or the at least one outlet (82) is connectable to at least one outflow (18) of the connecting head (12) for the treating fluid, wherein the at least one housing connecting part (100) features a functional surface (106, 108) in each case on axially opposite sides with respect to the connecting axis (20), wherein the spin-on filter (14) features on the side of the housing cover (60) at least one sealing means (92, 94, 96, 98) which can sealingly interact with a corresponding component (24), in particular a sealing surface, on the side of the connecting head (12) towards the environment, wherein the at least one sealing means (92, 94, 96, 98) is disposed with respect to the connecting axis (20) radially inside the at least one housing connecting part (100), **characterized in that** an edge (59) of the housing pot (58) on the side of the housing cover (60) at least projects beyond the at least one housing connecting part (100) and the at least one sealing means (92, 94, 96, 98) axially externally with respect to the connecting axis (20).

2. Spin-on filter according to claim 1, **characterized in that** the edge (59) of the housing pot (58) projects beyond the at least one sealing means (92, 94, 96, 98) by a maximum of 15 mm, in particular by a maximum of 10 mm, preferably by a maximum of 5 mm and that the edge (59) projects beyond the at least one housing connecting part (100) with respect to the connecting axis (20) by a maximum of 15 mm, in particular by a maximum of 10 mm, preferably by a maximum of 5 mm.

3. Spin-on filter according to one of the preceding claims, **characterized in that** at least one part of the at least one sealing means (92, 94, 96, 98) is in particular integrally connected to the housing cover (60).

4. Spin-on filter according to one of the preceding claims, **characterized in that** the at least one sealing means (92, 94, 96, 98) features at least one seal (96).

5. Spin-on filter according to one of the preceding claims, **characterized in that** the at least one functional surface (106, 108) has an approximately helical course around the connecting axis (20).

6. Spin-on filter according to one of the preceding claims, **characterized in that** at least one housing connecting part (100) features at least one part of a helical bayonet-type connecting means (34) or contributes to form it.

7. Spin-on filter according to one of the preceding claims, **characterized in that** the at least one housing connecting part (100) is or can be prefabricated as a separate part.

8. Treatment apparatus (10), in particular filter apparatus for treating, in particular filtering, in particular liquid fluids, in particular fuel, oil or water, in particular of an internal combustion engine, in particular of a motor vehicle, with at least one spin-on filter (14) according to one of the preceding claims, and with a connecting head (12) which features at least one inflow (16) for the fluid to be treated which is connectable to the at least one inlet (88), and/or at least one outflow (18) for the treated fluid which is connectable to the at least one outlet (82), wherein the connecting head (12) and the spin-on filter (14) can be connected to one another using a releasable bayonet-type connecting means (34) by executing a rotary/plug-in movement around a connecting axis (20) of the treatment apparatus (10) and the connecting means (34) features on the side of the connecting head (12) at least one head connecting part (32) which can interact for connecting the connecting means (34) to the housing connecting part (100) on the side of the housing (56).

## Revendications

1. Filtre interchangeable (14) pour un dispositif de traitement (10), notamment d'un dispositif de filtration pour le traitement, notamment pour le filtrage de fluides notamment liquides, notamment de carburant, d'huile ou d'eau, notamment d'un moteur à combustion interne, notamment d'un véhicule automobile, qui présente un boîtier (56) avec un pot de boîtier (58), un couvercle de boîtier (60), au moins une entrée (88) pour le fluide à traiter et au moins une sortie (82) pour le fluide traité, le filtre interchangeable (14) pouvant être raccordé à une tête de raccord (12) du dispositif de traitement (10) au moyen d'un dispositif de raccordement (34) amovible de type baïonnette par un mouvement de rotation / d'enfichage autour d'un axe de liaison (20) du dispositif de traitement (10), et le dispositif de raccordement (34) présentant au moins un élément de raccordement de boîtier (100) du côté du boîtier (56) qui peut interagir afin de relier le dispositif de raccordement (34) à au moins un élément de raccordement de tête (32) du côté de la tête de raccord (12), l'entrée (88), au moins au nombre d'une, pouvant être reliée à une arrivée (16), au moins au nombre d'une, de la tête de raccord (12) pour le fluide à traiter et/ou la sortie (82), au moins au nombre d'une, pouvant être reliée à un écoulement (18), au moins au nombre d'un, de la tête de raccord (12) pour le fluide traitant, l'élément de raccordement de boîtier (100), au moins au nombre d'un, présentant des côtés opposés en sens axial à l'axe de liaison (20) respectivement une surface fonctionnelle (106, 108), le filtre interchangeable (14) présentant du côté du couvercle de boîtier (60) au moins un dispositif d'étanchéité (92, 94, 96, 98) qui peut interagir de manière étanchant vers l'environnement avec un composant correspondant (24), notamment d'une surface d'étanchéité, du côté de la tête de raccord (12), le dispositif d'étanchéité (92, 94, 96, 98), au moins au nombre d'un, étant disposé par rapport à l'axe de liaison (20) de manière radiale à l'intérieur d'un élément de raccordement de boîtier (100), au moins au nombre d'un, **caractérisé en ce qu'**un bord (59) du pot de boîtier (58) du côté du couvercle de boîtier (60) dépasse axialement à l'extérieur au moins l'élément de raccordement de boîtier (100), au moins au nombre d'un, et le dispositif d'étanchéité (92, 94, 96, 98), au moins au nombre d'un, par rapport à l'axe de liaison (20).

2. Filtre interchangeable selon la revendication 1, **caractérisé en ce que** le bord (59) du pot de boîtier (58) dépasse le dispositif d'étanchéité (92, 94, 96, 98), au moins au nombre d'un, de 15 mm au maximum, notamment de 10 mm au maximum, de préférence de 5 mm au maximum et que le bord (59) dépasse l'élément de raccordement de boîtier (100), au moins au nombre d'un, par rapport à l'axe de liaison (20) de 15 mm au maximum, notamment de 10 mm au maximum, de préférence de 5 mm au maximum.

3. Filtre interchangeable selon l'une des revendications précédentes, **caractérisé en ce qu'**au moins une partie du dispositif d'étanchéité (92, 94, 96, 98), au moins au nombre d'un, est reliée au couvercle de boîtier (60) notamment d'un seul tenant.

4. Filtre interchangeable selon l'une des revendications précédentes, **caractérisé en ce que** le dispositif d'étanchéité (92, 94, 96, 98), au moins au nombre d'un, présente au moins un joint d'étanchéité (96).

5. Filtre interchangeable selon l'une des revendications précédentes, **caractérisé en ce qu'**au moins une surface fonctionnelle (106, 108) évolue de manière quasi hélicoïdale autour de l'axe de liaison (20).

6. Filtre interchangeable selon l'une des revendications précédentes, **caractérisé en ce qu'**au moins un élément de raccordement de boîtier (100) présente ou forme au moins une partie d'un dispositif de raccordement (34) de type baïonnette hélicoïdale.

7. Filtre interchangeable selon l'une des revendications précédentes, **caractérisé en ce que** l'élément de raccordement de boîtier (100), au moins au nombre d'un, est ou peut-être préfabriqué en tant que composant séparé.

8. Dispositif de traitement (10), notamment dispositif de filtration pour le traitement, notamment pour le filtrage de fluides notamment liquides, notamment de carburant, d'huile ou d'eau, notamment d'un moteur à combustion interne, notamment d'un véhicule automobile, avec au moins un filtre interchangeable (14) selon l'une des revendications précédentes, et avec une tête de raccord (12) qui présente au moins une arrivée (16) pour le fluide à traiter pouvant être raccordée à l'entrée (88), au moins au nombre d'une, et/ou au moins un écoulement (18) pour le fluide traité pouvant être raccordé à la sortie (82), au moins au nombre d'une, la tête de raccord (12) et le filtre interchangeable (14) pouvant être reliés au moyen d'un dispositif de raccordement (34) amovible de type baïonnette par un mouvement de rotation/d'enfichage autour d'un axe de liaison (20) du dispositif de traitement (10), et le dispositif de raccordement (34) présentant au moins un élément de raccordement de tête (32) du côté de la tête de raccord (12) pouvant interagir pour relier le dispositif de raccordement (34) à l'élément de raccordement de boîtier (100) du côté du boîtier (56).
